(19) Europäisches Patentamt
European Patent Office
Office européen des brevets

(11) **EP 0 376 110 B1**

(12) **EUROPÄISCHE PATENTSCHRIFT**

(45) Veröffentlichungstag und Bekanntmachung des Hinweises auf die Patenterteilung:
**04.09.1996 Patentblatt 1996/36**

(51) Int Cl.6: **G01N 35/00**, G01N 21/78

(21) Anmeldenummer: **89123343.9**

(22) Anmeldetag: **18.12.1989**

(54) **Testträger-Analysesystem**

Test strip analysing system

Analyseur pour bandes de test

(84) Benannte Vertragsstaaten:
**AT BE CH DE ES FR GB GR IT LI LU NL SE**

(30) Priorität: **28.12.1988 DE 3844104**

(43) Veröffentlichungstag der Anmeldung:
**04.07.1990 Patentblatt 1990/27**

(73) Patentinhaber: **BOEHRINGER MANNHEIM GMBH**
**68298 Mannheim (DE)**

(72) Erfinder:
• **Fritsche, Rainer, Dr. Ing.**
**D-6835 Brühl (DE)**
• **Nöhl, Klaus**
**D-6805 Heddesheim (DE)**
• **Pollmann, Klaus, Dr.rer.nat.**
**Indianapolis, IN 46250 (US)**
• **Schmidt, Elmar, Dr.**
**D-6800 Mannheim (DE)**

(74) Vertreter: **Pfeifer, Hans-Peter, Dr.,**
**Dr. H.-P. Pfeifer Dr. P. Jany, Patentanwälte**
**Beiertheimer Allee 19**
**76137 Karlsruhe (DE)**

(56) Entgegenhaltungen:
EP-A- 0 165 535          EP-A- 0 256 806
EP-A- 0 262 445

## Beschreibung

Die Erfindung betrifft ein Testträger-Analysesystem nach dem Oberbegriff des Anspruchs 1 sowie ein entsprechendes Verfahren.

Während früher im klinischen Labor die Konzentration beispielsweise der Bestandteile des Blutes praktisch ausschließlich mit Hilfe flüssiger Reagenzien bestimmt wurde, haben in jüngerer Zeit sogenannte trägergebundene Tests zunehmend an Bedeutung gewonnen. Bei diesen sind die Reagenzien in entsprechenden Schichten eines festen Testträgers eingebettet, auf den ein Tropfen der Probe aufgebracht wird. Die Reaktion der Probe mit dem Reagenzsystem führt zu einem Farbumschlag in der Farbbildungsschicht des Testträgers.

Zu den Testträgern werden vielfach Auswertegeräte angeboten, die spezifisch auf die zugehörigen Testträger abgestimmt sind und mit diesen ein Testträger-Analysesystem bilden. Diese Geräte haben eine Optikeinheit zur reflometrischen Bestimmung der Farbänderung der Farbbildungsschicht.

Zur reflometrischen (häufig auch "reflexionsphotometrischen") Messung der diffusen Reflexion (Reflektivität) einer Oberfläche ist stets eine Referenzmessung erforderlich, bei der die diffuse Reflexion einer Referenzfläche mit bestimmter Reflektivität bestimmt wird. Das Ergebnis der eigentlichen Probenmessung, bei der die diffuse Reflexion der Farbbildungsschicht bestimmt wird, wird in Relation zu der Referenzmessung gesetzt.

Bei Testträger-Analysesystemen wird für die Referenzmessung häufig ein spezieller Testträger verwendet, der ein Testfeld mit bekannter Reflektivität hat. Dieser wird vor jeder einzelnen Messung oder zumindest jeweils zu Beginn einer Meßserie in das Gerät eingelegt, um die Referenzmessung durchzuführen. Je öfter dies geschieht, desto geringer ist die Gefahr, daß durch Veränderungen der Gerätecharakteristik (beispielsweise Verstärkerdrift, Verschmutzung optischer Bauteile, variierende Streulichteinflüsse) das Meßergebnis verfälscht wird. Da jedoch jede Referenzmessung einen Handhabungsschritt erfordert, sind häufige Referenzmessungen aufwendig. Dies gilt auch dann, wenn das trockne, d.h. von der Probe noch nicht benetzte Testfeld eines Testträgers als Referenzfläche benutzt wird, weil der Testträger jeweils eingelegt, die Referenzmessung durchgeführt, der Testträger wieder herausgenommen, die Probe aufgegeben und der Testträger erneut in das Gerät eingelegt werden muß.

Eine abgewandelte Ausführungsform eines Testträger-Analyse-Systems, bei dem das Testfeld selbst als Referenzfläche benutzt wird, ist in der EP 0 256 806 A2 beschrieben. Auch dabei wird ausdrücklich hervorgehoben, daß das noch nicht mit der Probenflüssigkeit benetzte Testfeld für die Referenzmessung benutzt werden soll.

Andere Testträger-Auswertegeräte arbeiten mit einer gerätefesten Referenzfläche. Damit ist eine häufige Referenzmessung unproblematisch realisierbar. Die Genauigkeit ist jedoch davon abhängig, daß sich nicht nur die Referenzfläche selbst, sondern auch der "Referenzkanal", also die für die Referenzmessung zuständige optische Anordnung und elektronische Auswerteschaltung langfristig nicht verändern. Außerdem besteht bei gerätefesten Referenzflächen nicht die Möglichkeit, die Referenzeigenschaften auf die Erfordernisse verschiedener Testfeldertypen oder Testfelder-Herstellungsverfahren auszurichten.

Zur Überwindung dieser Probleme macht sich die vorliegende Erfindung die besonderen Eigenschaften der eingangs bezeichneten Art von Testträger-Analysesystemen zunutze. Die Farbbildungsschicht ist dabei meist klappenartig mit einer Kante an der Basisschicht befestigt und steht im Ausgangszustand des Testträgers vor Durchführung einer Bestimmung schräg von der Basisschicht ab. Darunter befindet sich eine Flüssigkeitsreservoirschicht, die die Probenflüssigkeit - meist nachdem sie zuvor einige vorgelagerte Schichten durchströmt hat - aufnimmt.

Die Auswertegeräte solcher Analysesysteme haben ein Andruckelement zum Andrücken der Farbbildungsschicht an die Flüssigkeitsreservoirschicht. Die Optikeinheit, das Andrückelement sowie gegebenenfalls weitere Bestandteile des Gerätes, beispielsweise eine Heizung zur Temperierung des Testträgers und eine Meß- und Auswerteschaltung werden mit Hilfe einer Steuereinheit gesteuert, die üblicherweise einen Mikroprozessor enthält.

Derartige Testträger sind beispielsweise in der EP-A 00 45 476 (entsprechend US-A 4 477 575), der EP-A 0 113 896 (entsprechend US-A 4 604 264) , der EP-A 0 267 519, der EP-A 0 262 445 und der EP-A 0 208 952 beschrieben.

Entsprechende Auswertegeräte sind aus der EP-A 75 767 (entsprechend US-A 4 553 848), EP-A 00 75 766 (entsprechend US-A 4 523 853) und EP-A 129 220 (entsprechend US-A 4 780 283) bekannt.

Eine besonders einfache und genaue Bestimmung wird erfindungsgemäß durch ein Testträger-Analysesystem gemäß Anspruch 1 und ein Verfahren gemäß Anspruch 7 erreicht.

Überraschenderweise hat sich gezeigt, daß auf diese Weise eine sehr genaue quantitative Auswertung der Farbbildung möglich ist, obwohl die Farbbildungsschicht zum Zeitpunkt der Referenzmessung bereits von der Probenflüssigkeit benetzt und vollständig durchfeuchtet ist.

Da die Referenzmessung und die Probenmessung nacheinander an der gleichen, bereits benetzten Schicht erfolgt, entfallen zusätzliche Handhabungsschritte. Darüber hinaus wird eine überdurchschnittlich gute Reproduzierbarkeit der Meßergebnisse erreicht. Dies ist wesentlich darauf zurückzuführen, daß der zeitliche Abstand zwischen Probenmessung und Referenzmessung kurz ist, der gleiche Meßkanal (also die gleiche Optikeinheit und die gleiche elektronische Schaltung) für beide Messungen verwendet wird und die Position der Optikeinheit über der Farbbildungsschicht unverändert bleiben kann. Die Farbbildungsschicht dient bei der Referenzmessung als Vergleichsstandard mit doppelter Funktion, nämlich zur Eliminierung von Meßfehlern im Sinne eines Zweistrahlverfahrens und als Eichstandard für die Remissionsmessung.

Die Erfindung wird im folgenden anhand eines in den Figuren schematisch dargestellten Ausführungsbeispiels näher erläutert; es zeigen:

Fig. 1 und 2    in Seitenansicht einen Testträger und die Optikeinheit eines zugehörigen Auswertegerätes in zwei verschiedenen Funktionsphasen,

Fig. 3          eine Ausführungsform der Erfindung in einer aus Querschnitt und Blockschaltbild kombinierten Darstellungsweise,

Fig. 4          eine Diagramm des zeitlichen Verlaufs des Remissionssignals bei einem erfindungsgemäßen Testträger-Analysesystem.

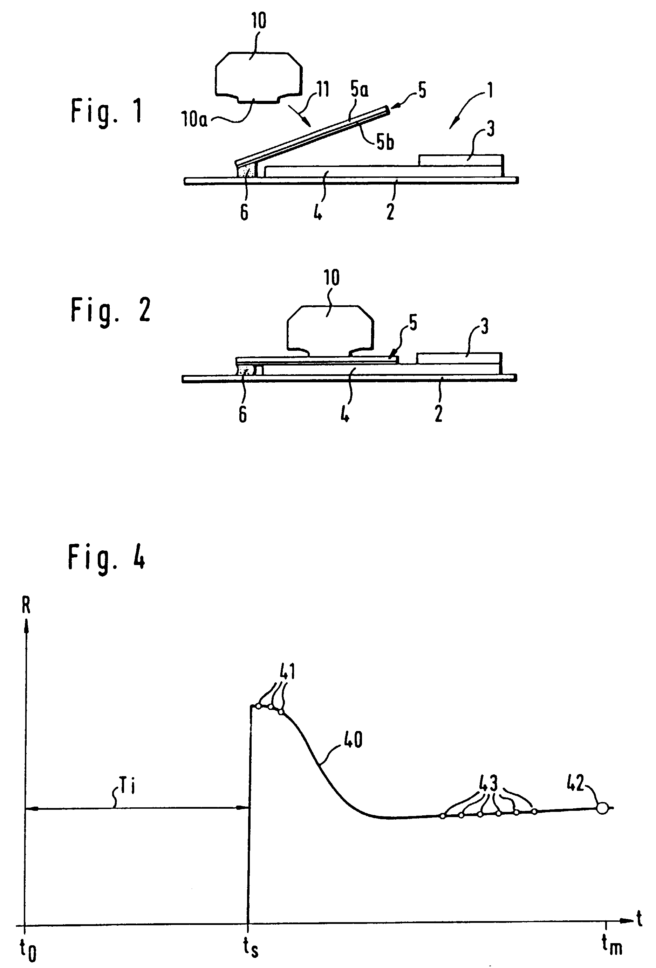

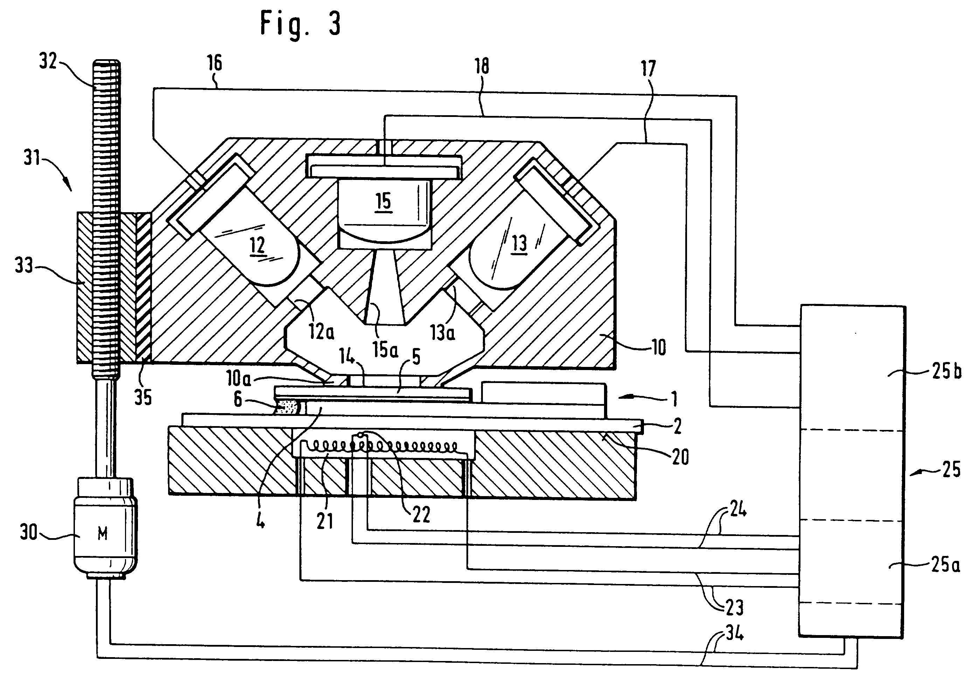

Der in den Figuren 1 und 2 dargestellte Testträger 1 weist eine längliche Basisschicht 2 auf. Auf dieser sind eine Vorreaktionsschicht 3, eine Flüssigkeitsreservoirschicht 4 und eine Farbbildungsschicht 5 befestigt. Die Farbbildungsschicht 5 ist mit einem Schmelzkleberstreifen 6 so angeklebt, daß sie in dem in Fig. 1 dargestellten Ausgangszustand vor Durchführung einer Bestimmung schräg nach oben absteht, so daß sie keinen Fluidkontakt zu der Reservoirschicht 4 hat. Sie besteht vorzugsweise - wie dargestellt - aus einer durchsichtigen Trägerfolie 5a, auf die eine Farbreaktionsschicht 5b beschichtet ist.

Die Farbbildungsschicht sollte einen relativ hohen Anteil an Pigment (insbesondere Titandioxid) von mindestens etwa 2 %, bevorzugt mindestens 4 % haben. Besonders geeignet für die vorliegende Erfindung ist eine Farbbildungsschicht auf Basis eines Kunststoff-Dispersionsfilms, wie er in der EP-A-0016387 (entsprechend US-A 4 312 834) beschrieben ist.

Die Farbbildungsschicht 5 läßt sich durch externe Manipulation in eine Position (Fig. 2) bringen, in der ein Fluidkontakt, also ein Flüssigkeitsaustausch,zwischen der Farbbildungsschicht 5 und der Flüssigkeitsreservoirschicht 4 möglich ist. Dies geschieht mit Hilfe eines Andrückelementes 10a, welches im dargestellten Fall Teil einer Optikeinheit 10 ist, die mit Hilfe eine nicht dargestellten Bewegungsmechanik in Richtung des Pfeiles 11 bewegbar ist.

In Fig. 3 sind nähere Einzelheiten eines Testträger-Analyse-systems dargestellt, wobei der Testträger 1 mit Fig. 1 übereinstimmt.

Er ist auf einer Auflagefläche 20 so positioniert, daß sich die Farbbildungsschicht 5 über einer Heizeinrichtung 21 befindet, die mit Hilfe eines Temperaturfühlers 22 kontrolliert wird. Die Heizeinrichtung 21 und der Temperaturfühler 22 sind über Leitungen 23 bzw. 24 an eine Steuereinheit 25 angeschlossen, die eine elektronische Schaltung 25a zur Regelung der Heizung einschließt.

Die im Querschnitt dargestellte Optikeinheit 10 enthält als Lichtsender zwei Leuchtdioden 12 und 13. Die als Andruckelement 10a wirkende Blende der Optikeinheit 10 umrahmt den Meßbereich 14 der Farbbildungsschicht 5, dessen diffuse Reflexion gemessen werden soll.

Die Leuchtdioden 12 und 13 sind aus gegenüberliegenden Raumrichtungen schräg auf die Meßfläche 14 gerichtet. Senkrecht über der Meßfläche befindet sich ein Lichtempfänger, vorzugsweise eine Photodiode 15. Die von den LED's ausgehenden Strahlenbündel werden von vorgelagerten Blendenöffnungen 12a, 13a begrenzt. Dem Lichtempfänger 15 ist eine Blende 15a vorgelagert, durch die störende Randstrahlen ausgeblendet werden. Besonders bevorzugt ist eine Blende gemäß dem US-Patent 4 523 853.

Die Leuchtdioden 12 und 13 und der Lichtempfänger 15 sind über Leitungen 16, 17 und 18 mit der Steuereinheit 25 verbunden, die eine Meß- und Auswerteschaltung 25b zur Ansteuerung der Leuchtdioden sowie zur Verstärkung und Auswertung des Signals des Lichtempfängers 15 einschließt. Derartige Schaltungen sind bekannt. Ein Beispiel ist in der europäischen Patentschrift 75 767 beschrieben.

Die Optikeinheit 10 ist mit Hilfe eines Motors 30 und einer Antriebsmechanik 31 in einer im wesentlichen senkrecht zu der Meßfläche 14 verlaufenden Richtung zwischen zwei Positionen beweglich, wobei in der dargestellten unteren Position (entsprechend Fig. 2) die Farbbildungsschicht 5 gegen die Flüssigkeitsreservoirschicht 4 gedrückt wird. In einer nicht dargestellten oberen Position ist die Optikeinheit 10 dagegen von dem Testträger abgehoben, so daß die Farbbildungsschicht 5 (wie in Fig. 1 dargestellt) von diesem absteht.

Die Antriebsmechanik besteht im dargestellten Fall aus einer Spindel 32 und einer mit einem entsprechenden Innengewinde versehenen Verbindungsplatte 33, die über ein federndes Kraftbegrenzungselement 35 an die Optikeinheit 10 angeschraubt ist. Sie kann jedoch in beliebiger anderer, dem Fachmann geläufiger Weise, beispielsweise mit Hilfe entsprechender Stellmotoren, ausgestaltet sein.

Zur Durchführung einer analytischen Bestimmung mit dem erfindungsgemäßen Testträger-Analysesystem wird ein Tropfen Probenflüssigkeit, insbesondere Blut,auf die Vorreaktionsschicht 3 aufgegeben. Sie löst ein dort vorhandenes Reagenz, wobei eine Vorreaktion abläuft. Aus der Schicht 3 gelangt die Flüssigkeit in die Flüssigkeitsreservoirschicht 4, in der sie sich ausbreitet. Danach steht die Flüssigkeit auch in dem unterhalb der Farbbildungsschicht 5 liegenden Teilbereich der Schicht 4 zur Verfügung. Die Einzelheiten des Testablaufes in den Schichten 3 und 4 hängen von dem jeweiligen Test ab und sind für die vorliegende Erfindung nicht wesentlich. Beispiele sind den oben zitierten Patentpublikationen zu entnehmen. Die Schicht 3 kann gegebenenfalls auch ganz entfallen oder aus einer Mehrzahl von Einzelschichten bestehen, die verschiedene Aufgaben in dem Testablauf erfüllen. Insbesondere ist zweckmäßigerweise eine Erythrozytenabtrennschicht vorgesehen, die die Abtrennung der roten Blutkörperchen aus dem Blut erlaubt, so daß Plasma oder Serum für den weiteren Ablauf des Tests zur Verfügung steht (vgl. US-Patent 4 477 575).

Ein wesentlicher Vorteil der dargestellten Testträgerkonstruktion besteht darin, daß ein zweistufiger Testablauf möglich ist, bei dem die Flüssigkeit zunächst bis in die Flüssigkeitsreservoirschicht 4 gelangt, jedoch noch kein Kontakt zu der Farbbildungsschicht besteht. Dadurch kann eine Inkubationszeit für eine auf dem Testträger ablaufende, der Farbbildung vorgelagerte Reaktion festgelegt werden.

In Fig. 4 ist mit $t_0$ der Zeitpunkt bezeichnet, zu dem der Testträger in das Gerät eingelegt wird. Ti bezeichnet die Zeitspanne bis zum Andrücken der Farbbildungsschicht 5, also die erwähnte Inkubationszeit.

Zum Zeitpunkt $t_s$ (s=Start) wird die Farbbildungsschicht 5 mit Hilfe des Andruckelementes 10a gegen die Flüssigkeitsreservoirschicht 4 gedrückt, so daß die Flüssigkeit aus der Schicht 4 in die Schicht 5 übertreten kann und die Farbbildung beginnt. Die Kurve 40 zeigt den zeitlichen Verlauf des der diffusen Reflexion R entsprechenden Meßsignals. Man erkennt, daß die Reflektivität unmittelbar nach dem Startzeitpunkt zunächst nahezu konstant bleibt, bevor die Farbbildung einsetzt, die zu einem Abfallen des Reflexionssignals führt. Die Referenzmessung wird zu einem Zeitpunkt durchgeführt, zu dem die Farbbildungsschicht vollständig durchfeuchtet ist, aber andererseits die Farbbildung noch nicht im wesentlichen Umfang eingesetzt hat.

Zweckmäßigerweise besteht die Referenzmessung aus mehreren Einzelmessungen (Meßpunkte 41), aus denen im einfachsten Fall ein Mittelwert gebildet wird. Insbesondere bei Tests, bei denen die Farbbildung schnell einsetzt, kann es auch zweckmäßig sein, aus den Einzelmeßwerten auf den Zeitpunkt $t_s = 0$ rückwärts zu extrapolieren, um die diffuse Reflexion der Farbbildungsschicht vor Einsetzen der Farbbildung zu ermitteln.

Die Farbbildungsreaktion läuft nun im Regelfall so ab, daß sich das Reflexionssignal einem weitgehend linearen Verlauf asymptotisch nähert. Entsprechend dem jeweiligen Test ist meist ein bestimmter Zeitpunkt $t_m$ nach Reaktionsbeginn definiert, zu welchem die Probenmessung durchgeführt, d.h. die diffuse Reflexion der Farbbildungsschicht gemessen und in die Konzentration der gewünschten Analyse umgerechnet wird (sogenannte Endpunktbestimmung). Dieser Meßpunkt ist in der Figur mit 42 bezeichnet.

Vorzugsweise besteht die Probenmessung ebenso wie die Referenzmessung aus mehreren Einzelmeßwerten, wobei Meßzeit dadurch eingespart werden kann, daß diese Einzelmeßwerte 43 vor dem

Zeitpunkt $t_m$ in einem Bereich liegen, in dem bereits ein weitgehend linearer Verlauf der Farbbildungskurve zu erwarten ist. Zweckmäßiqerweise werden hier mehrere Einzelmessungen durchgeführt und auf Linearität des Kurvenverlaufes geprüft. Wenn ein linearer Verlauf festgestellt wird, kann auf den Zeitpunkt $t_m$ extrapoliert werden, so daß die Messung abgebrochen werden kann, sobald der letzte der Meßpunkte 43 gemessen ist.

Der beschriebene Ablauf wird durch die Steuereinheit 25 kontrolliert, so daß das Andrücken der Farbbildungsschicht und die optischen Messungen in einem auf den jeweiligen Test abgestimmten zeitlichen Ablauf erfolgen. Dabei werden zu den Meßzeitpunkten jeweils die Leuchtdioden 12 und/oder 13 und der Empfänger 15 aktiviert. Das Empfängersignal wird von der Meß- und Auswerteschaltung 25b verstärkt und ausgewertet.

Wesentlich für die Erfindung ist, daß sowohl bei der Referenzmessung (Meßpunkte 41) als auch bei der Probenmessung (Meßpunkt 42 bzw. Meßpunkte 43) die diffuse Reflexion der Farbbildungsschicht möglichst exakt bestimmt wird. Aus diesem Grund und wegen der unvermeidlichen Inhomogenitäten der Farbbildungsschicht ist es erforderlich, eine möglichst gut angenähert diffuse Beleuchtung der Meßfläche 14 zu verwenden.

Deswegen wird die Meßfläche mit mehreren Leuchtdioden, welche vorzugsweise die gleiche Nominalwellenlänge haben, aus verschiedenen Richtungen bestrahlt, wobei die Einstrahlungsachsen vorzugsweise die gleiche Neigung zu der Meßfläche (vorzugsweise 30° bis 60°) haben. Bei bekannten Optikeinheiten zur Auswertung von Analysetestträgern beleuchten mehrere Leuchtdioden gleicher Nominalwellenlänge gleichzeitig die Meßfläche und die dabei resultierende diffuse Reflexion wird mit einem - meist wie auch hier senkrecht über der Meßfläche angeordneten - Meßempfänger bestimmt.

Im Rahmen der vorliegenden Erfindung wurde jedoch festgestellt, daß bei der gleichzeitigen Beleuchtung mit mehreren Lichtsendern erhebliche Meßfehler dadurch verursacht werden können, daß die üblichen LED's, auch wenn sie vollständig typengleich sind, erheblich verschiedene Eigenschaften, insbesondere bezüglich ihrer Intensität, ihrer Wellenlänge und der Vorzugsstrahlrichtung des Lichtstrahls in Relation zur Gehäuseachse haben können. Diese Einflüsse können sich so summieren, daß im Ergebnis die an dem Empfänger entstehende Signalintensität sich für eine LED um einen Faktor 5 oder mehr von einer anderen in die gleiche Optikeinheit eingebauten LED unterscheidet. Wenn man nun in der bekannten Weise die Meßfläche 14 gleichzeitig mit beiden LED's beleuchtet, ergibt sich eine entsprechend gewichtete Mittelung, d.h. das Meßsignal ist weit überwiegend von einer der beiden LED's bestimmt.

Bei der Erfindung werden vorzugsweise mehrere in der Optikeinheit enthaltene Lichtsender sowohl bei der Referenzmessung, als auch bei der Probenmessung nacheinander eingeschaltet, so daß die Meßfläche jeweils nur von dem eingeschalteten Lichtsender beleuchtet wird.

Die dabei jeweils gewonnenen Meßsignale des Empfängers werden für die Lichtsender getrennt voneinander in Beziehung zueinander gesetzt, um lichtsenderspezifische Zwischenergebnisse zu gewinnen, aus denen die diffuse Reflexion berechnet wird.

Bezeichnet man im dargestellten Fall das üblicherweise bezüglich Fremdlicht und Verstärkerdrift korrigierte (vgl. z.B. EP-A- 0075767) Intensitätssignal bei Beleuchtung mit der Leuchtdiode 12 mit $I_{p1}$ für die Probenmessung und $I_{R1}$ für die Referenzmessung und die entsprechenden Signale für die Leuchtdiode 13 mit $I_{P2}$ und $I_{R2}'$ SO ergeben sich lichtsenderspezifische Zwischenergebnisse $R_1$, $R_2$, beispielsweise durch Quotientenbildung:

$$R_1 = \frac{I_{P1}}{I_{R1}} \qquad R_2 = \frac{I_{P2}}{I_{R2}}$$

Der endgültige Remissionswert läßt sich dann algebraisch ermitteln, beispielsweise durch einfache ungewichtete Mittelwertbildung:

$$R = \frac{R_1 + R_2}{2}$$

Durch diese bevorzugten Maßnahmen wird erreicht, daß die Meßergebnisse der einzelnen Leuchtdioden unabhängig von ihren individuellen Eigenschaften gleichmäßig gewichtet werden.

Dadurch wird eine sehr gute Annäherung an eine diffuse Beleuchtung und damit eine sehr exakte Bestimmung der diffusen Reflexion sowohl bei der Referenzmessung, als auch bei der Probenmessung ermöglicht.

Die Werte $R_1$, $R_2$ und R sind selbstverständlich keine absoluten Remissionswerte in Prozent. Hierzu wäre eine Bezugnahme auf einen Remissionsstandard mit einer Reflektivität von 100% erforderlich. Für die Zwecke der Auswertung medizinischer Testträger ist eine absolute Reflektivitätsbestimmung jedoch nicht erforderlich, weil üblicherweise die für das jeweilige System spezifische Abhängigkeit der Konzentration C des Probenbestandteils von R durch Eichen bestimmt wird.

**Patentansprüche**

1. Testträger-Analysesystem zur analytischen Bestimmung eines Bestandteils einer Probenflüssigkeit, insbesondere einer Körperflüssigkeit, bestehend aus

  Testträgern (1) mit auf einer Basisschicht befestigten, ein Reagenzsystem enthaltenden Testschichten, zu denen eine Farbbildungsschicht (5) und eine Flüssigkeitsreservoirschicht (4) gehören, wobei die Farbbildungsschicht (5) dergestalt beweglich mit der Basisschicht verbunden ist, daß sie im Ausgangszustand des Testträgers vor Durchführung einer Bestimmung nicht in Fluidkontakt zu der Flüssigkeitsreservoirschicht steht, jedoch durch externe Manipulation an diese angedrückt werden kann, und

  einem Auswertegerät mit einem Andruckelement (10a) zum Andrücken der Farbbildungsschicht (5) an die Flüssigkeitsreservoirschicht (4), einer Optikeinheit (10) zur reflometrischen Bestimmung der Farbänderung der Farbbildungsschicht und einer Steuereinheit (25) zur Steuerung der Gerätefunktionen, wobei die reflometrische Bestimmung eine Referenzmessung, bei der die diffuse Reflexion einer Referenzfläche bestimmt wird und eine Probenmessung, bei der die diffuse Reflexion der Farbbildungsschicht bestimmt wird, umfaßt,

  **dadurch gekennzeichnet,** daß
  unter Kontrolle der Steuereinheit (25) die Referenzmessung und die Probenmessung mittels der gleichen Optikeinheit (10) nacheinander an der vollständig durchfeuchteten, auch als Referenzfläche dienenden Farbbildungsschicht (5) erfolgen, nachdem die Farbbildungsschicht an die Flüssigkeitsreservoirschicht (4) mit Hilfe des Andruckelementes (10a) angedrückt ist.

2. Testträger-Analysesystem nach Anspruch 1, **dadurch gekennzeichnet**, daß die Referenzmessung aus mehreren nacheinander erfolgenden Einzelmessungen besteht.

3. Testträger-Analysesystem nach Anspruch 1, **dadurch gekennzeichnet,** daß die Probenmessung aus mehreren nacheinander erfolgenden Einzelmessungen besteht.

4. Testträger-Analysesystem nach Anspruch 1, **dadurch gekennzeichnet,** daß die Optikeinheit (10) mindestens zwei Lichtsender (12, 13) enthält, die aus verschiedenen Raumrichtungen auf die Farbbildungsschicht (5) gerichtet sind, die Farbbildungsschicht (5) sowohl bei der Referenzmessung als auch bei der Probenmessung mit jedem der Lichtsender (12, 13) beleuchtet wird und die dabei gewonnenen Meßsignale in Beziehung zueinander gesetzt werden, um lichtsenderspezifische Zwischenergebnisse zu gewinnen, aus denen die diffuse Reflexion berechnet wird.

5. Testträger-Analysesystem nach Anspruch 4, **dadurch gekennzeichnet,** daß die Lichtsender (12, 13) Leuchtdioden sind.

6. Testträger-Analysesystem nach Anspruch 5, **da-**

**durch gekennzeichnet**, daß die Leuchtdioden die gleiche Nominalwellenlänge haben.

7. Verfahren zur analytischen Bestimmung einer Probenflüssigkeit, insbesondere einer Körperflüssigkeit, mit Hilfe von

Testträgern mit auf einer Basisschicht befestigten, ein Reagenzsystem enthaltenden Testschichten, zu denen eine Farbbildungsschicht und eine Flüssigkeitsreservoirschicht gehören, wobei die Farbbildungsschicht dergestalt beweglich mit der Basisschicht verbunden ist, daß sie im Ausgangszustand des Testträgers vor Durchführung einer Bestimmung nicht in Fluidkontakt zu der Flüssigkeitsreservoirschicht steht, jedoch durch externe Manipulation an diese angedrückt werden kann, und

einem Auswertegerät mit einem Andruckelement, mit dem die Farbbildungsschicht an die Flüssigkeitsreservoirschicht angedrückt wird, einer Optikeinheit, mit der die Farbänderung der Farbbildungsschicht reflometrisch bestimmt wird und einer Steuereinheit, mit der die Gerätefunktionen gesteuert werden,

**dadurch gekennzeichnet,** daß

nach dem Andrücken der Farbbildungsschicht durch das Andruckelement und der vollständigen Durchfeuchtung der Farbbildungsschicht eine Referenzmessung und anschließend eine Probenmessung an der Farbbildungsschicht mit der gleichen Optikeinheit vorgenommen werden,

wobei als Referenzmessung das diffuse Reflexionsvermögen der vollständung durchfenchteten Farbbildungsschicht unmittelbar nach dem Andrücken gegen die Flüssigkeitsreservoirschicht bestimmt wird.

## Claims

1. Test carrier analysis system for the analytical determination of a component of a sample fluid, in particular of a body fluid, consisting of

test carriers (1) with test layers fixed to a base layer and containing a reagent system, said test layers comprising a colour formation layer (5) and a fluid reservoir layer (4), where the colour formation layer (5) is connected movably to the base layer in such a way that in the initial state of the test carrier prior to the carrying out of a determination it is not in fluid contact with the fluid reservoir layer, but can be pressed against the latter by external manipulation,

and of an evaluation apparatus with a pressure element (10a) for the pressing of the colour formation layer (5) against the fluid reservoir layer (4), an optical unit (10) for the reflometric determination of the colour variation of the colour formation layer and a control unit (25) for controlling the apparatus functions, where the reflometric determination incorporates a reference measurement in which the diffuse reflection of a reference surface is determined and a sample measurement in which the diffuse reflection of the colour formation layer is determined,

**characterised in that**
under the control of the control unit (25) the reference measurement and the sample measurement are carried out in turn by means of the same optical unit (10) on the fully wetted colour formation layer (5), also serving as reference surface, after the colour formation layer has been pressed against the fluid reservoir layer (4) by means of the pressure element (10a).

2. Test carrier analysis system according to claim 1, **characterised in that** the reference measurement consists of several individual measurements carried out successively.

3. Test carrier analysis system according to claim 1, **characterised in that** the sample measurement consists of several individual measurements carried out successively.

4. Test carrier analysis system according to claim 1, **characterised in that** the optical unit (10) contains at least two light transmitters (12, 13) which are directed onto the colour formation layer (5) from different directions in space, the colour formation layer (5) is illuminated with each of the light transmitters (12, 13) both during the reference measurement and during the sample measurement, and the measurement signals thereby obtained are related to each other in order to obtain light-transmitter-specific intermediate results from which the diffuse reflection is calculated.

5. Test carrier analysis system according to claim 4, **characterised in that** the light transmitters (12, 13) are light-emitting diodes.

6. Test carrier analysis system according to claim 5, **characterised in that** the light-emitting diodes have the same nominal wave-length.

7. Method for the analytical determination of a sample fluid, in particular of a body fluid, by means of

test carriers with test layers fixed to a base layer and containing a reagent system, said test layers comprising a colour formation layer and a fluid reservoir layer, where the colour formation layer is connected movably to the base layer in such a way that in the initial state of the test carrier prior to the carrying out of a determination it is not in fluid contact with the fluid reservoir layer, but can be pressed against the latter by external manipulation, and of an evaluation apparatus with a pressure element by which the colour formation layer is pressed against the fluid reservoir layer, an optical unit by which the colour variation of the colour formation layer is determined reflectometrically and a control unit by which the apparatus functions are controlled,

**characterised in that**

after the pressing of the colour formation layer by the pressure element and after the complete wetting of the colour formation layer a reference measurement and subsequently a sample measurement are carried out on the colour formation layer with the same optical unit,

where as reference measurement the diffuse reflectivity of the fully wetted colour formation layer is determined directly after the pressing against the fluid reservoir layer.

**Revendications**

1. Système d'analyse de supports de test destiné à analyser un composant d'un échantillon liquide, notamment d'une humeur, comprenant

des supports de test (1) présentant des couches de test fixées sur une couche de base et contenant un système de réactifs, lesdites couches de test comprenant une couche chromogène (5) et une couche faisant office de réservoir de liquide (4), la couche chromogène (5) étant reliée de façon mobile à la couche de base de sorte que, à l'état initial du support de test avant l'analyse, elle ne se trouve pas en contact fluide avec la couche faisant office de réservoir de liquide, mais qu'elle puisse être pressée contre celle-ci par manipulation externe, et

un appareil d'exploitation avec un élément presseur (10a) servant à presser la couche chromogène (5) contre la couche faisant office de réservoir de liquide (4), une unité optique (10) pour la détermination réflométrique du changement de couleur de la couche chromogène et une unité de commande (25) servant à la commande des fonctions de l'appareil, la détermination réflométrique comprenant une mesure de référence mesurant la réflexion diffuse d'une surface de référence et une mesure de l'échantillon mesurant la réflexion diffuse de la couche chromogène,

**caractérisé** en ce que, sous le contrôle de l'unité de commande (25), la mesure de référence et la mesure de l'échantillon sont effectuées l'une après l'autre au moyen de la même unité optique (10) sur la couche chromogène (5) complètement mouillée servant également de surface de référence, après avoir pressé la couche chromogène contre la couche faisant office de réservoir de liquide (4) à l'aide de l'élément presseur (10a).

2. Système d'analyse de supports de test suivant la revendication 1, **caractérisé** en ce que la mesure de référence comprend plusieurs mesures individuelles effectuées l'une après l'autre.

3. Système d'analyse de supports de test suivant la revendication 1, **caractérisé** en ce que la mesure de l'échantillon comprend plusieurs mesures individuelles effectuées l'une après l'autre.

4. Système d'analyse de supports de test suivant la revendication 1, **caractérisé** en ce que l'unité optique (10) comprend au moins deux émetteurs de lumière (12, 13) dirigés sur la couche chromogène (5) en provenance de différentes directions, que la couche chromogène (5) est éclairée par chacun des émetteurs de lumière (12, 13) non seulement lors de la mesure de référence mais aussi lors de la mesure de l'échantillon et qu'un rapport est établi entre les signaux de mesure ainsi produits afin d'obtenir des résultats intermédiaires spécifiques aux émetteurs de lumière permettant de calculer la réflexion diffuse.

5. Système d'analyse de supports de test suivant la revendication 4, **caractérisé** en ce que les émetteurs de lumière (12, 13) sont des diodes lumineuses.

6. Système d'analyse de supports de test suivant la revendication 5, **caractérisé** en ce que les diodes lumineuses ont la même longueur d'onde nominale.

7. Procédé pour analyser un échantillon liquide, notamment une humeur, à l'aide

de supports de test présentant des couches de test fixées sur une couche de base et contenant un système de réactifs, lesdites couches de test comprenant une couche chromogène et une couche faisant office de réservoir de liquide, la couche chromogène étant reliée de façon mobile à la couche de base de sorte que, à l'état initial du support de test avant l'analyse, elle ne se trouve pas en contact fluide avec la couche faisant office de réservoir de liquide, mais qu'elle puisse être pressée contre celle-ci par manipulation externe, et

d'un appareil d'exploitation avec un élément presseur servant à presser la couche chromogène contre la couche faisant office de réservoir de liquide, d'une unité optique servant à la détermination réflométrique du changement de couleur de la couche chromogène et d'une unité de commande servant à la commande des fonctions de l'appareil,

**caractérisé** en ce que, après que l'élément presseur ait pressé la couche chromogène contre la couche faisant office de réservoir de liquide et après que la couche chromogène ait été complètement mouillée, une mesure de référence et ensuite une mesure de l'échantillon sont effectuées sur la couche chromogène à l'aide de la même unité optique, le pouvoir de réflexion diffuse de la couche chromogène complètement mouillée étant déterminé comme mesure de référence immédiatement après qu'elle ait été pressée contre la couche faisant office de réservoir de liquide.

Fig. 1

Fig. 2

Fig. 4

Fig. 3

EP 0 376 110 B1